# EUROPEAN PATENT APPLICATION

(11) **EP 3 089 445 A1**
(43) Date of publication of application: **02.11.2016**
(21) Application number: 14874722.3
(22) Date of filing: 31.10.2014
(51) Int. Cl.: H04N 5/74, F21V 23/00, F21V 33/00

(54) **FUNCTION MODULE SYSTEM**

(30) Priority: 27.12.2013 JP 2013273370
(71) Applicant: Sony Corporation, Tokyo 108-0075 (JP)
(72) Inventor: NAKAYAMA, Ryuji, Tokyo 108-0075 (JP); SAITO, Hiroshi, Tokyo 108-0075 (JP)
(74) Representative: MFG Patentanwälte Meyer-Wildhagen Meggle-Freund Gerhard PartG mbB
(86) International application number: PCT/JP2014/079136
(87) International publication number: WO 2015/098287

(57) **Abstract**

[Object] To provide a functional module system capable of implementing various function of a plurality of functional modules sequentially connected from a power supply unit without obstructing a scenic view of a space by enabling the functional modules to be connected in different order.

[Solution] Provided is afunctional module system including: a first functional module configured to be connectable to a power supply unit for a luminaire; and a second functional module configured to be connectable to the first functional module. The first and second functional modules are further connectable to the power supply unit in order of the second functional module and the first functional module by changing connection order.

## Description

### Technical Field

The present disclosure relates to a functional module system.

### Background Art

In recent years, a home theater that enables people to enjoy movies or music live in their own home has been popular. Specifically, this is implemented by a home projector for projecting an image onto a wall and a plurality of speakers for constructing the sound wrapping around the listener.

A technique in which a project can be installed by being replaced with an indoor luminaire upon installation of the projector is developed. For example, Patent Literature 1 below discloses a liquid crystal projector that is intended to improve installation properties and to achieve simplification of projection preparation of the suspended ceiling type liquid crystal projector.

In addition, Patent Literature 2 below discloses a projector apparatus in which a projector body is attached and hanging from the ceiling with easy operation without performing work on the ceiling by providing a projector hooking ceiling that engages with a ceiling rosette.

### Citation List

### Patent Literature

Patent Literature 1: JP H7-264527A
Patent Literature 2: JP2004-184768A

### Summary of Invention

### Technical Problem

However, separate arrangement of the above-described projector or the plurality of speakers in the living room causes a problem of obstructing an original scenic view of the living room.

Therefore, the present disclosure provides a functional module system capable of implementing various function of a plurality of functional modules sequentially connected from a power supply unit without obstructing a scenic view of a space by enabling the functional modules to be connected in different order.

### Solution to Problem

According to the present disclosure, there is provided a functional module system including: a first functional module configured to be connectable to a power supply unit for a luminaire; and a second functional module configured to be connectable to the first functional module. The first and second functional modules are further connectable to the power supply unit in order of the second functional module and the first functional module by changing connection order.

### Advantageous Effects of Invention

According to the embodiments of the present disclosure as described above, it is possible to implement various function of a plurality of functional modules sequentially connected from a power supply unit without obstructing a scenic view of a space by enabling the functional modules to be connected in different order.

Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is a diagram illustrated to describe an overview of a functional module system according to one embodiment of the present disclosure.
[FIG. 2] FIG. 2 is a block diagram illustrating the basic configuration of a ceiling/side type projector module according to the present embodiment.
[FIG. 3] FIG. 3 is a block diagram illustrating the basic configuration of a floor type projector module according to the present embodiment.
[FIG. 4] FIG. 4 is a block diagram illustrating the basic configuration of a light module according to the present embodiment.
[FIG. 5] FIG. 5 is a block diagram illustrating the basic configuration of a speaker module according to the present embodiment.
[FIG. 6] FIG. 6 is a block diagram illustrating the basic configuration of a camera/sensor module according to the present embodiment.
[FIG. 7] FIG. 7 is a block diagram illustrating the basic configuration of a remote controller according to the present embodiment.
[FIG. 8] FIG. 8 is a diagram illustrated to describe the arrangement of a functional module system according to a first embodiment.
[FIG. 9] FIG. 9 is a sequence diagram illustrating the operation process by each module in the functional module system according to the first embodiment and the remote controller.
[FIG. 10] FIG. 10 is a diagram illustrated to describe the arrangement of a functional module system according to a second embodiment.
[FIG. 11] FIG. 11 is a sequence diagram illustrating the operation process by each module in the functional module system according to the second embodiment and the remote controller.
[FIG. 12] FIG. 12 is a diagram illustrated to describe the arrangement of a functional module system according to a third embodiment.
[FIG. 13] FIG. 13 is a sequence diagram illustrating the operation process by each module in the functional module system according to the third embodiment and the remote controller.
[FIG. 14] FIG. 14 is a diagram illustrated to describe the arrangement of a functional module system according to a fourth embodiment.
[FIG. 15] FIG. 15 is a sequence diagram illustrating the operation process by each module in the functional module system according to the fourth embodiment and the remote controller.
[FIG. 16] FIG. 16 is a diagram illustrated to describe the arrangement of a functional module system according to a fifth embodiment.
[FIG. 17] FIG. 17 is a sequence diagram illustrating the operation process by each module in the functional module system according to the fifth embodiment and the remote controller.
[FIG. 18] FIG. 18 is a diagram illustrated to describe the arrangement of a functional module system according to a sixth embodiment.
[FIG. 19] FIG. 19 is a sequence diagram illustrating the operation process by each module in the functional module system according to the sixth embodiment and the remote controller.
[FIG. 20] FIG. 20 is a diagram illustrated to describe the arrangement of a functional module system according to a seventh embodiment.
[FIG. 21] FIG. 21 is a sequence diagram illustrating the operation process by each module in the functional module system according to the seventh embodiment.
[FIG. 22] FIG. 22 is a diagram illustrated to describe the arrangement of the functional module system according to an eighth embodiment.
[FIG. 23] FIG. 23 is a top view of the arrangement illustrated in FIG. 22.
[FIG. 24] FIG. 24 is a sequence diagram illustrating the operation process by a plurality of functional module systems according to the eighth embodiment and the remote controller.
[FIG. 25] FIG. 25 is a diagram illustrated to describe the arrangement of a modification according to the eighth embodiment.
[FIG. 26] FIG. 26 is a top view of the arrangement illustrated in FIG. 25.
[FIG. 27] FIG. 27 is a block diagram illustrating the configuration of a projector module according to a ninth embodiment.
[FIG. 28] FIG. 28 is a flowchart illustrating the operation process of the projector module illustrated in FIG. 27.
[FIG. 29] FIG. 29 is a block diagram illustrating the configuration of a light module according to a tenth embodiment.
[FIG. 30] FIG. 30 is a flowchart illustrating the operation process of the light module illustrated in FIG. 29.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

The description will be given in the following order.
1. Overview of Functional Module System according to one Embodiment of present Disclosure
2. Basic Configuration
   2-1. Projector Module (Ceiling/Side type)
   2-2. Projector Module (Floor type)
   2-3. Light Module
   2-4. Speaker Module
   2-5. Camera/Sensor Module
   2-6. Remote Controller
3. Embodiments
   3-1. First Embodiment (Projector-Speaker)
   3-2. Second Embodiment (Projector-Speaker-Light)
   3-3. Third Embodiment (Light-Speaker-Projector)
   3-4. Fourth Embodiment (Projector-Speaker-Light-Camera/Sensor)
   3-5. Fifth Embodiment (Speaker-Light-Camera/Sensor)
   3-6. Sixth Embodiment (Speaker-Luminaire)
   3-7. Seventh Embodiment (Multiple Lights)
   3-8. Eighth Embodiment (Coordination of Devices)
   3-9. Ninth Embodiment (High-performance Projector Module)
   3-10. Tenth Embodiment (High-performance Light Module)
4. Conclusion

### «1. Overview of Functional Module System according to one Embodiment of present Disclosure»

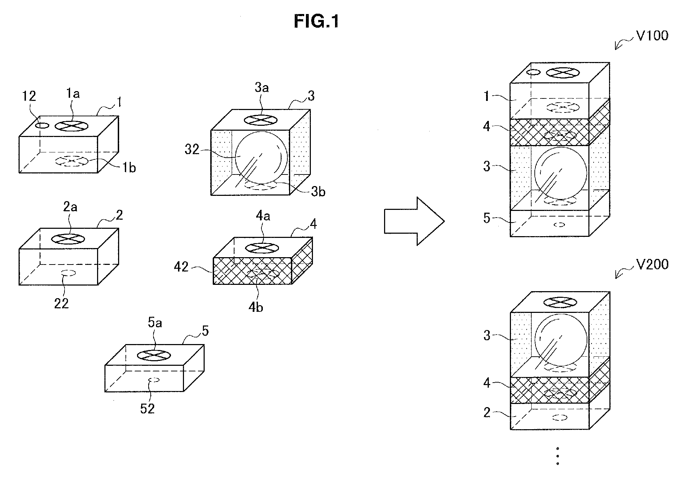

An overview of a functional module system according to one embodiment of the present disclosure will be first described with reference to FIG. 1. As illustrated in FIG. 1, the functional module system V according to the present embodiment is configured to include a plurality of modules which are connected in series and each of which has at least one function.

Specifically, as illustrated in FIG. 1, the functional module system V is configured to include a combination of at least one or more modules of a projector module 1, a projector module 2, a light module 3, a speaker module 4, and a camera/sensor module 5. The projector module 1 functions to project an image onto a ceiling/side, the projector module 2 functions to project an image onto a floor, the light module 3 has a luminaire, the speaker module 4 has a sound output function, and the camera/sensor module 5 has a detection function.

The housing of each of the modules 1 to 5 is not limited to a rectangular or cubic shape, but it may be a cylindrical, polygon, spherical, or other shapes. In addition, each of the modules 1 to 5 is provided with at least one or more of power connection units 1a, 1b, 2a, 3a, 3b, 4a, 4b, and 5a that are connected to other modules to receive power. Although no particular limitation on the structure of the power connection units, the power connection units are also possible to be connected directly to a luminaire power supply unit (not shown in FIG. 1) and have a structure in compliance with the specifications of the luminaire power supply unit. In addition, the power connection unit of each of the modules 1 to 5 is also possible to be connected to a suspension member (not shown in FIG. 1), which is configured to be connected to the power supply unit provided at the ceiling and is used to suspend the functional module system V.

The projector module 1 is configured to include the power connection unit 1a that is connected to another module or the power supply unit and is used to receive power, the power connection unit 1b that is connected to another module and is used to supply power, and a projection unit 12. The power connection units 1a and 1b are provided on opposing surfaces, and the projection unit 12 is provided on a surface (upper surface) on which the power connection unit 1b is provided. This allows the projector module 2 to project an image onto a ceiling, for example, when the projector module 2 is suspended from the power supply unit. In addition, the projection unit 12 may be provided on a side surface located between a surface (upper surface) on which the power connection unit 1a is provided and a surface (bottom surface) on which the power connection unit 1b is provided. This allows the projector module 2 to project an image in the lateral direction. Note that the projector module 2 may be provided with a plurality of projection units 12 or may be provided with the projection unit 12 having a structure in which the projection direction can be changed for projection in a plurality of directions.

The projector module 2 is configured to include the power connection unit 2a, which is connected to another module or the power supply unit and is used to receive power, and a projection unit 22. The power connection units 2a and the projection unit 22 are provided on opposing surfaces, and when the projector module 2 is connected to the distal end of the functional module system V, an image can be projected toward a downward direction (floor side direction).

The light module 3 is configured to include the power connection unit 3a, which is connected to another module or the power supply unit to receive power, the power connection unit 3b, which is connected to another module to supply power, and a light unit (illumination unit) 32. The power connection units 3a and 3b are provided on opposing surfaces (upper and bottom surfaces), and the light unit 32 is provided in the center of its housing. The light unit 32 is implemented as, for example, a light emitting diode (LED). In addition, the light module 3 has a plurality of side surfaces and at least one surface of which is formed by a member having the light permeability for allowing light from the light unit 32 provided inside the housing to be transmitted to the outside.

The speaker module 4 is configured to include the power connection unit 4a, which is connected to another module or the power supply unit to receive power, the power connection unit 4b, which is connected to another module to supply power, and a speaker unit (sound output unit) 4. The power connection units 4a and 4b are provided on opposing surfaces (upper and bottom surface), and the speaker unit 42 is provided on a side surface of its housing. In addition, the speaker unit 42 may be a stereo speaker.

The camera/sensor module 5 is configured to include the power connection unit 5a, which is connected to another module or the power supply unit to receive power, and a camera/sensor unit 52. The power connection unit 5a and the camera/sensor unit 52 are provided on opposing surfaces. The camera/sensor unit 52 is a sensor for detecting surrounding circumstances, and is implemented as at least any one of an imaging sensor, a motion detector, a range sensor, a G-sensor (accelerometer), and other sensors. For example, when the camera/sensor unit 52 is implemented as an imaging sensor and the camera/sensor module 5 is connected to the distal end of the functional module system V, the camera/sensor module 5 can capture an image in the downward direction.

By using a plurality of the functional modules described above, the functional module system V is formed, for example, as follows.

For example, a functional module system V100 is formed in which the projector module 1, the speaker module 4, the light module 3, and the camera/sensor module 5 are connected in this order. In this case, the projector module 1 is connected to a luminaire power supply unit (not shown) and the power supplied from the power supply unit is sent to each of the modules in this order.

In addition, a functional module system V200 is formed in which the light module 3, the speaker module 4, and the projector module 2 are connected in this order. In this case, the light module 3 is connected to a luminaire power supply unit (not shown) and the power supplied from the power supply unit is sent to each of the modules in this order.

In this way, by using the functional module system V in which a plurality of modules having different functions are connected and integrated, it is possible to provide various functions without obstructing a scenic view of a space such as a living or dining room. In addition, each of the modules that constitute the functional module system V can be replaced depending on the applications and the order of connection can be changed.

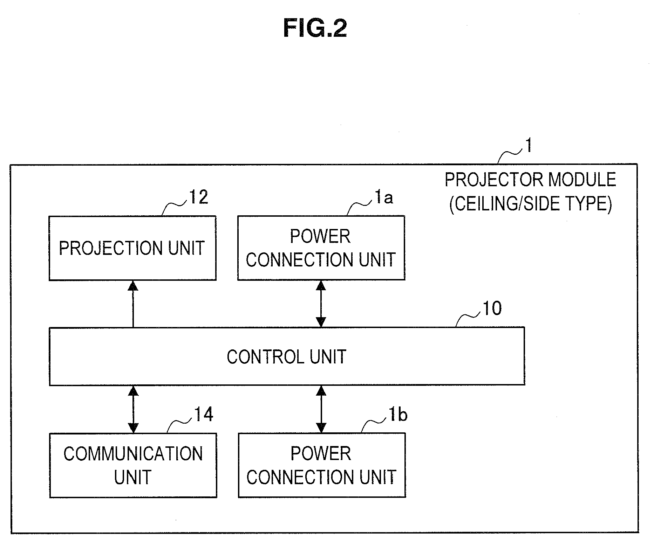

The overview of the functional module system according to one embodiment of the present disclosure has been described above. Subsequently, the configuration of each functional module included in the functional module system according to the present disclosure will be described with reference to FIGS. 2 to 6.

### «2. Basic Configuration»

### <2-1. Projector Module (Ceiling/Side type)>

FIG. 2 is a block diagram illustrating the basic configuration of a ceiling/side type projector module 1 according to the present embodiment. As illustrated in FIG. 2, the projector module 1 is configured to include the power connection units 1a and 1b, the projection unit 12, and a communication unit 14. The power connection units 1a and 1b and the projection unit 12 are described previously with reference to FIG. 1, and thus the description thereof herein will be omitted.

A control unit 10 is composed of a microcomputer that is configured to include, for example, a central processing unit (CPU), read only memory (ROM), random access memory (RAM), a nonvolatile memory, and an interface unit. The control unit 10 controls each component in the projector module 1. Specifically, the control unit 10 according to the present embodiment extracts projectable image data from data (decoded content data) received via the communication unit 14 and controls the projection unit 12 to project an image.

The communication unit 14 is connected to an external device using wireless communication and functions to transmit and receive data. The wireless communication is achieved by, for example, Bluetooth (registered trademark), infrared communication, Wi-Fi (registered trademark), and other standards. In addition, the communication unit 14 according to the present embodiment may receive content data from a remote controller 7 described later or a cloud server.

### <2-2. Projector Module (Floor type)>

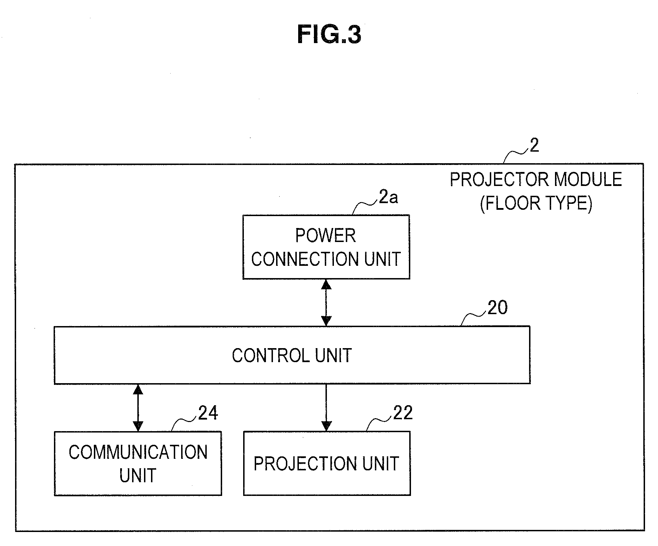

FIG. 3 is a block diagram illustrating the basic configuration of the floor type projector module 2 according to the present embodiment. As illustrated in FIG. 3, the project module 2 is configured to include the power connection unit 2a, the projection unit 22, and a communication unit 24. The functions of these components are similar to those of the components of the projector module 1 described above, and thus the description thereof herein will be omitted.

### <2-3. Light Module>

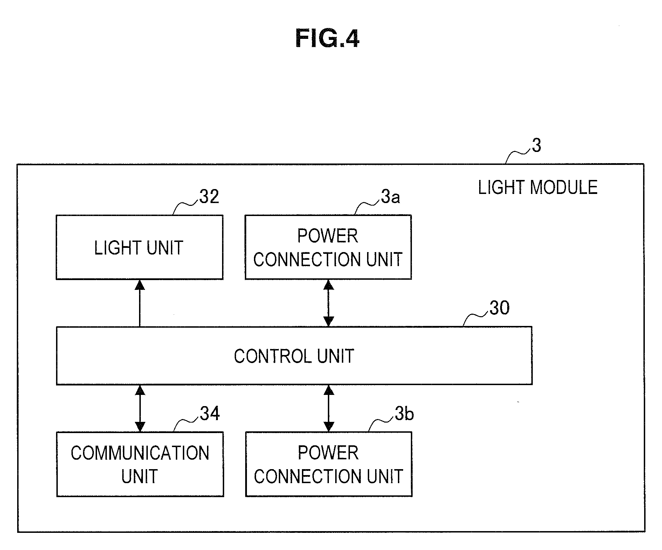

FIG. 4 is a block diagram illustrating the basic configuration of the light module 3 according to the present embodiment. As illustrated in FIG. 4, the light module 3 is configured to include the power connection units 3a and 3b, the light unit 32, and a communication unit 34. The power connection units 3a and 3b and the light unit 32 are described previously with reference to FIG. 1, and thus the description thereof herein will be omitted. In addition, the communication unit 34 has a function similar to that of the communication unit 14 of the projector module 1.

A control unit 30 extracts data of a light pattern from data (decoded content data) received via the communication unit 34 and controls the lighting of the light unit 32 in accordance with the extracted light pattern. The light pattern is a pattern of color, luminance, blinking, or the like of light.

### <2-4. Speaker Module>

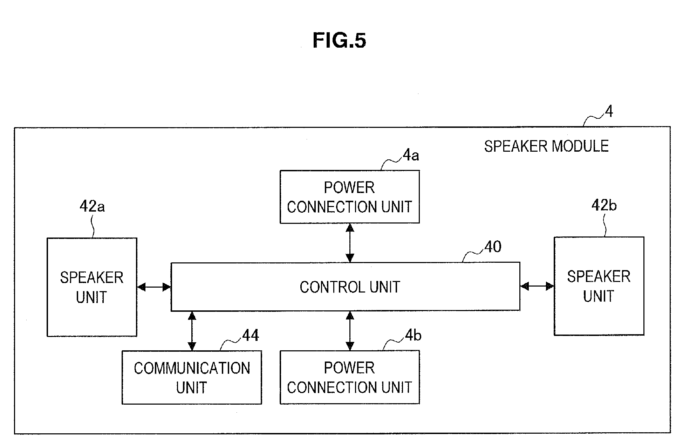

FIG. 5 is a block diagram illustrating the basic configuration of the speaker module 4 according to the present embodiment. As illustrated in FIG. 5, the speaker module 4 is configured to include the power connection units 4a and 4b, the speaker units 42a and 42b, and a communication unit 44. The power connection units 4a and 4b and the speaker units 42 (42a and 42b) are described previously with reference to FIG. 1, and thus the description thereof will be omitted. In addition, the communication unit 44 has a function similar to that of the communication unit 14 of the projector module 1.

A control unit 40 extracts an audio signal, which can be outputted from a speaker, from data (decoded content data) received via the communication unit 44, and controls the speaker unit 42 to output the audio as sound.

### <2-5. Camera/Sensor Module>

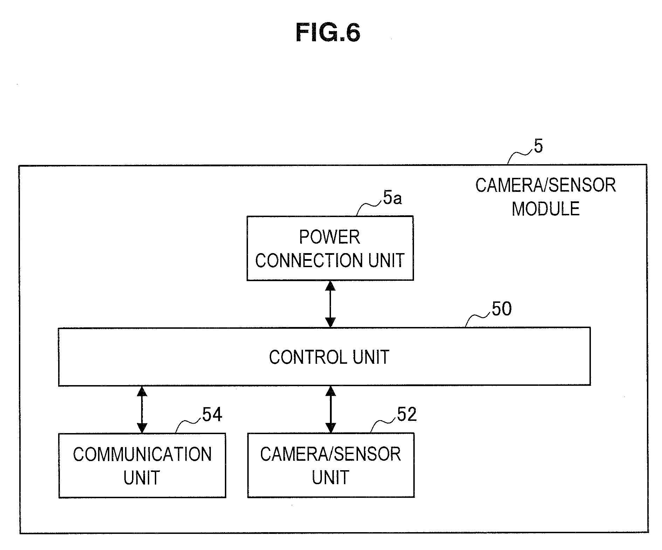

FIG. 6 is a block diagram illustrating the basic configuration of the camera/sensor module 6 according to the present embodiment. As illustrated in FIG. 6, the camera/sensor module 6 is configured to include the power connection unit 5a, the camera/sensor unit 52, and a communication unit 54. The power connection unit 5a and the camera/sensor unit 52 are described previously with reference to FIG. 1, and thus the description thereof herein will be omitted. In addition, the communication unit 54 has a function similar to that of the communication unit 14 of the projector module 1.

A control unit 50 controls the camera/sensor unit 52 to acquire camera/sensor data in accordance with a command received via the communication unit 54 and to return the camera/sensor data as a reply.

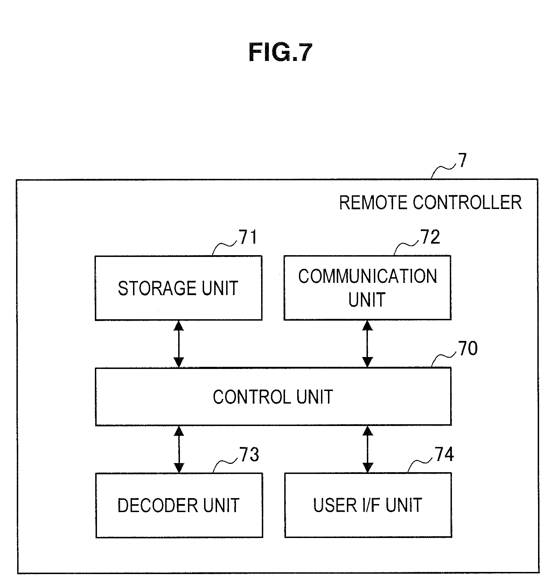

The configuration of each functional module included in the functional module system according to the present embodiment has been described above in detail. The functional module system V including a plurality of the above-described functional modules connected thereto can operate in accordance with an instruction from an external device. The present embodiment employs a remote controller 7 as one example of an external device, and the description thereof will be given with reference to FIG. 7 in detail.

### <2-6. Remote Controller>

The remote controller 7 may be implemented as an information processing device including smartphones, mobile phones, tablet terminals, personal digital assistants (PDAs), eyeglass-type terminals, watch-type terminals, personal computers (PCs), game consoles, or the like.

FIG. 7 is a block diagram illustrating the basic configuration of the remote controller 7 according to the present embodiment. As illustrated in FIG. 7, the remote controller 7 is configured to include a control unit 70, a storage unit 71, a communication unit 72, a decoder unit 73, and a user interface (I/F) unit 74.

The control unit 70 is composed of a microcomputer that is configured to include, for example, a CPU, ROM, RAM, a nonvolatile memory, and an interface unit. The control unit 70 controls each component in the projector module 1. Specifically, the control unit 70 according to the present embodiment controls the decoder unit 73 to decode the content stored in the storage unit 71 and controls the communication unit 72 to transmit the decoded content data (image, sound, light pattern, or the like) to each functional module included in the functional module system V, in accordance with a playback instruction inputted from the user I/F unit 74.

The storage unit 71 stores content to be played back in the functional module system. In addition, the storage unit 71 stores a program or the like that allows the main control unit 70 to execute various processes.

The communication unit 72 is connected to each functional module using wireless communication and functions to transmit and receive data. The wireless communication is achieved by, for example, Bluetooth (registered trademark), infrared communication, Wi-Fi (registered trademark), and other standards. In addition, the communication unit 72 according to the present embodiment may receive content data from a cloud server.

The decoder unit 73 functions to decode the content data that is encoded and stored.

The user interface (I/F) unit 74 has an output function and an input function, and outputs information to the user or receives information from the user. The output function includes, for example, a display unit or a sound output unit (speaker). The display unit is implemented as a liquid crystal display (LCD), an organic light-emitting diode (OLED), or the like, and displays a menu screen, an operation screen, or the like in accordance with an instruction from the control unit 70. The input function includes, for example, an operation input unit or a sound collection unit (microphone). The operation input unit is implemented as a button, a switch, a touch sensor for receiving an operation input through a display screen, or the like.

### «3. Embodiments»

Subsequently, the functional module system according one embodiment of the present disclosure will be described in detail with reference to several embodiments.

### <3-1. First Embodiment>

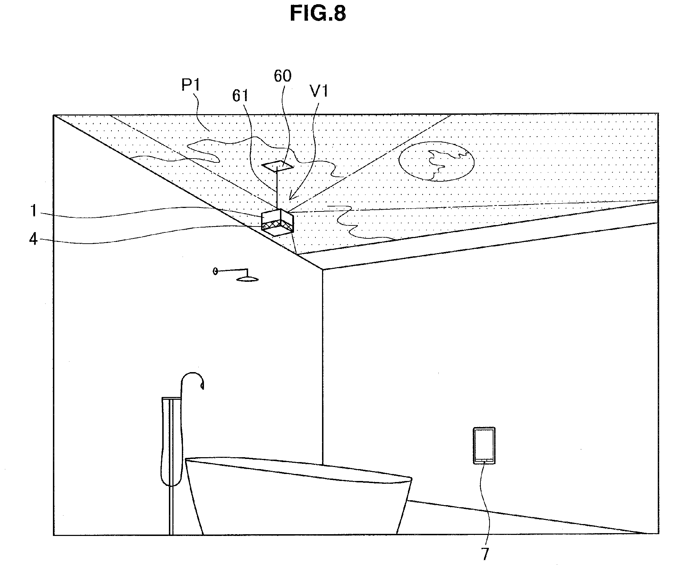

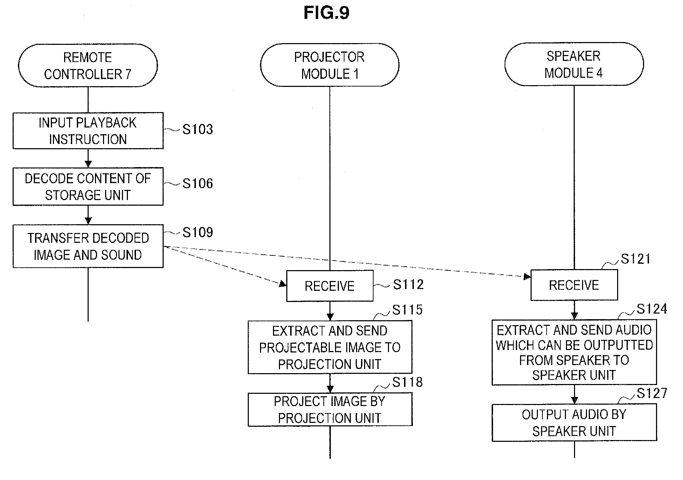

In the first embodiment, a functional module system V1 having functions of a projector and a speaker will be described with reference to FIGS. 8 and 9.

### (Arrangement)

FIG. 8 is a diagram illustrated to describe the arrangement of the functional module system V1 according to the first embodiment. As illustrated in FIG. 8, the functional module system V1 is configured to include the projector module 1 that is connected to a luminaire power supply unit 60 provided in a ceiling via a suspension member 61 and the speaker module 4 that is connected to the projector module 1.

The projector module 1 receives power from the power supply unit 60 and supplies power to the speaker module 4 connected to the projector module 1.

In addition, the functional module system V1 is controlled by the remote controller 7 implemented as a smartphone or the like held by the user.

The projector module 1 extracts projectable image data from data transmitted from the remote controller 7 and projects an image P1 (still/moving image) onto the ceiling as shown in FIG. 8. In addition, the speaker module 4 extracts audio, which can be outputted from a speaker, from data transmitted from the remote controller 7 and outputs the audio as sound.

In the example illustrated in FIG. 8, an image of moonlight night is projected onto the ceiling, and natural sound at night (sound of birds, frogs, or insect, sound of wind or rain, or the like) is played back from the speaker module 4.

Thus, it is possible to provide a predetermined scenic view, music, natural sound, or the like, for example, without installing an additional display device, screen, window, or the like in the living space, thereby providing a comfortable space where residents can relax. In addition, the projector module 1 and the speaker module 4 that implement them are connected in series as illustrated in FIG. 8 and are connected to the luminaire power supply unit 60 that is previously installed, thus these modules can be installed in the living space without obstructing a scenic view.

### (Operation Process)

Subsequently, the operation process according to the present embodiment will be described with reference to FIG. 9. FIG. 9 is a sequence diagram illustrating the operation process by the projector module 1 and the speaker module 4 included in the functional module system V1 according to the first embodiment and the remote controller 7. As illustrated in FIG. 9, first, in step S103, the user I/F unit 74 of the remote controller 74 receives a playback instruction as an input.

Then, in step S106, the control unit 70 of the remote controller 7 reads out content from the storage unit 71 and causes the decoder unit 73 to decode it, in response to the input of the playback instruction.

Next, in step S109, the control unit 70 of the remote controller 7 transmits the decoded content data (herein, for example, image and sound) to the projector module 1 and the speaker module 4 that constitute the functional module system V1.

Subsequently, in step S112, the projector module 1 receives data transmitted from the remote controller 7.

Then, in step S115, the control unit 10 of the projector module 1 extracts a projectable image from the received data and sends it to the projection unit 12.

Then, in step S118, the projection unit 12 projects the image.

On the other hand, in step S121, the speaker module 4 receives the data transmitted from the remote controller 7.

Then, in step S124, the control unit 40 of the speaker module 4 extracts audio, which can be outputted from a speaker, from the received data and send it to the speaker unit 42.

Then, in step S127, the speaker unit 42 outputs the extracted audio.

The operation process according to the present embodiment has been described. Steps S112 to S118 and steps S121 to S127 may be performed in parallel.

### <3-2. Second Embodiment>

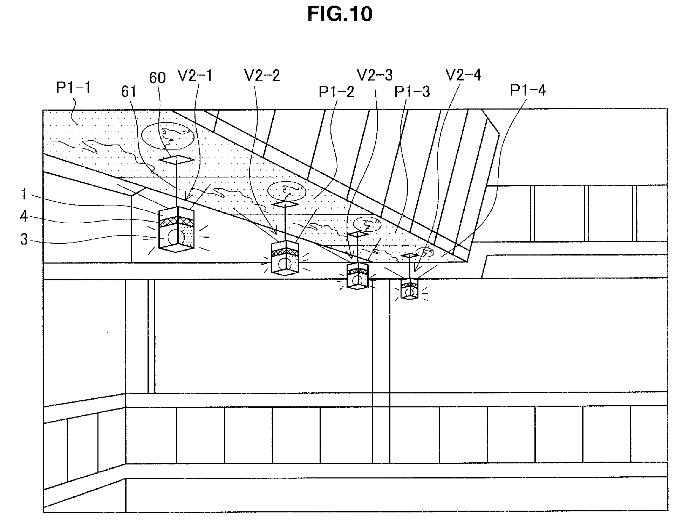

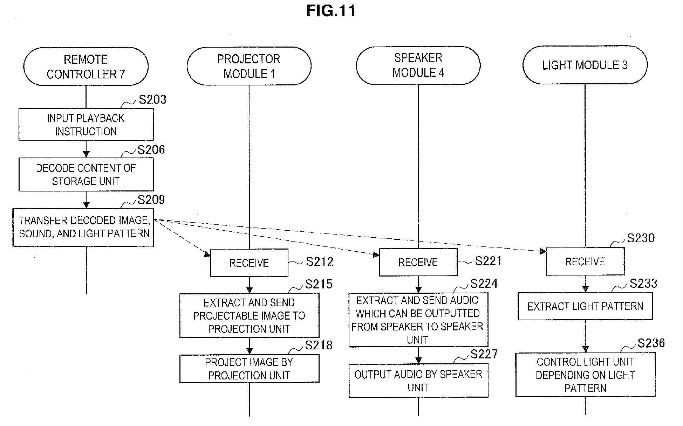

Subsequently, in the second embodiment, a functional module system V2 having functions of projector, speaker, and light will be described with reference to FIGS. 10 and 11.

### (Arrangement)

FIG. 10 is a diagram illustrated to describe the arrangement of the functional module system V2 according to the second embodiment. As illustrated in FIG. 10, the functional module system V2 is configured to include the projector module 1 connected to the luminaire power supply unit 60 provided in a ceiling via the suspension member 61, the speaker module 4 connected to the projector module 1, and the light module 3 connected to the speaker module 4.

The projector module 1 receives power from the power supply unit 60 and supplies power to the speaker module 4 connected to the projector module 1. In addition, the speaker module 4 receives power from the projector module 1 and supplies power to the light module 3 connected to the speaker module 4.

In addition, the functional module system V2 is controlled by the remote controller 7 (not shown in FIG. 10) implemented as a smartphone or the like held by the user.

The projector module 1 extracts projectable image data from data transmitted from the remote controller 7 and projects an image P1 (still/moving image) onto the ceiling as shown in FIG. 10. In addition, the speaker module 4 extracts audio, which can be outputted from a speaker, from data transmitted from the remote controller 7 and outputs the audio as sound. Further, the light module 3 extracts a light pattern from the data transmitted from the remote controller 7 and controls the lighting depending on the light pattern.

In the example illustrated in FIG. 10, a plurality of functional module systems V2-1 to V2-4 are installed, and images P1-1 to P-4 are projected from each projector module 1 toward the ceiling.

In the example illustrated in FIG. 10, images of moonlight night are projected onto the ceiling and natural sound at night (sound of birds, frogs, or insect, sound of wind or rain, or the like) is played back from the speaker module 4. Further, the illumination from the light module 3 is performed with the color corresponding to the projected images of moonlight night.

Thus, it is possible to provide a predetermined scenic view, music, natural sound, light beam, or the like, for example, without installing an additional display device, screen, window, or the like in the living space, thereby providing a comfortable space where residents can relax. In addition, the projector module 1, the speaker module 4, and the light module 3 that implement them are connected in series as illustrated in FIG. 10, and are connected to the luminaire power supply unit 60 that is previously installed. Thus, these modules can be installed in the living space without obstructing a scenic view.

### (Operation Process)

Subsequently, the operation process of the present embodiment will be described with reference to FIG. 11. FIG. 11 is a sequence diagram illustrating the operation process of the projector module 1, the speaker module 4, and the light module 3 included in the functional module system V2 according to the second embodiment, and the remote controller 7. As illustrated in FIG. 11, first, in step S203, the user I/F unit 74 of the remote controller 7 receives a playback instruction as an input.

Then, in step S206, the control unit 70 of the remote controller 7 reads out content from the storage unit 71 and causes the decoder unit 73 to decode it, in response to the input of the playback instruction.

Next, in step S209, the control unit 70 of the remote controller 7 transmits the decoded content data (herein, for example, image, sound, and light pattern) to the projector module 1, the speaker module 4, and the light module 3 that constitute the functional module system V2.

Subsequently, the process in steps S212 to S227 is performed similarly to the process illustrated in steps S 112 to S127 described with reference to FIG. 9.

Then, in step S230, the light module 3 receives data transmitted from the remote controller 7.

Next, in step S233, the control unit 30 of the light module 3 extracts a light pattern from the received data.

Then, in step S236, the control unit 30 of the light module 3 controls the illumination of the light unit 32 depending on the extracted light pattern.

The operation process of the present embodiment has been described. Steps S212 to S218, steps S221 to S227, and step S230 to S236 may be performed in parallel.

### <3-3. Third Embodiment>

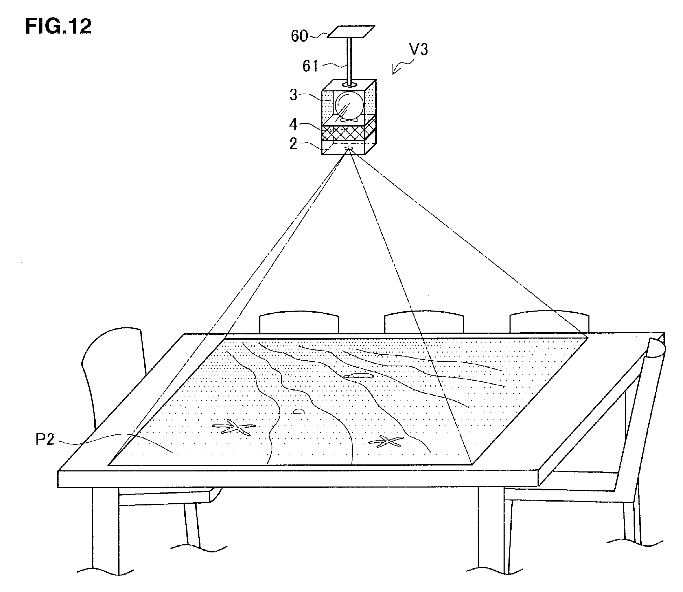

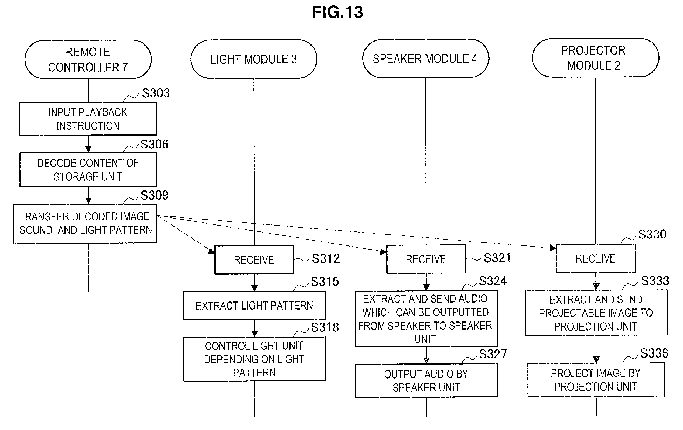

Subsequently, in the third embodiment, a functional module system V3 having functions of light, speaker, and projector will be described with reference to FIGS. 12 and 13.

### (Arrangement)

FIG. 12 is a diagram illustrated to describe the arrangement of the functional module system V3 according to the third embodiment. As illustrated in FIG. 12, the functional module system V3 is configured to include the light module 3 connected to the luminaire power supply unit 60 provided in a ceiling via the suspension member 61, the speaker module 4 connected to the light module 3, and the projector module 2 connected to the speaker module 4.

The light module 3 receives power from the power supply unit 60 and supplies power to the speaker module 4 connected to the light module 3. In addition, the speaker module 4 receives power from the light module 3 and supplies power to the projector module 2 connected to the speaker module 4.

In addition, the functional module system V3 is controlled by the remote controller 7 (not shown in FIG. 12) implemented as a smartphone or the like held by the user.

The light module 3 extracts a light pattern from the data transmitted from the remote controller 7 and controls the lighting depending on the light pattern. In addition, the speaker module 4 extracts audio, which can be outputted from a speaker, from the data transmitted from the remote controller 7 and outputs the audio as sound. Further, the projector module 2 extracts projectable image data from the data transmitted from the remote controller 7 and projects an image P2 (still/moving image) toward the downward direction (floor side) as illustrated in FIG. 12.

In the example illustrated in FIG. 12, an image of the surface of the sea as viewed from above is projected on a table, the illumination from the light module 3 is performed with the color corresponding to the projected image of the surface of the sea, and the sound of waves is played back from the speaker module 4.

Thus, it is possible to provide a predetermined scenic view, music, natural sound, light beam, or the like, for example, without installing an additional display device, screen, window, or the like in the living space, thereby providing a comfortable space where residents can relax. In addition, each of the modules that implement them are connected in series as illustrated in FIG. 12, and are connected to the luminaire power supply unit 60 that is previously installed. Thus, these modules can be installed in the living space without obstructing a scenic view.

### (Operation Process)

Subsequently, the operation process according to the present embodiment will be described with reference to FIG. 13. FIG. 13 is a sequence diagram illustrating the operation process by the light module 3, the speaker module 4, and the projector module 2 included in the functional module system V3 according to the third embodiment, and the remote controller 7. As illustrated in FIG. 13, first, in step S303, the user I/F unit 74 of the remote controller 7 receives a playback instruction as an input.

Then, in step S306, the control unit 70 of the remote controller 7 reads out content from the storage unit 71 and causes the decoder unit 73 to decode it, in response to the input of the playback instruction.

Next, in step S309, the control unit 70 of the remote controller 7 transmits the decoded content data (herein, for example, image, sound, and light pattern) to the light module 3, the speaker module 4, and the projector module 2 that constitute the functional module system V3.

Subsequently, the process in steps S312 to S318 and the process in steps S321 to S327 are performed similarly to the process illustrated in steps S230 to S136 and the process in steps S221 to S227, respectively, described with reference to FIG. 11.

Then, in step S330, the projector module 2 receives data transmitted from the remote controller 7.

Next, in step S333, the control unit 20 of the projector module 2 extracts a projectable image from the received data and sends it to the projection unit 22.

Then, in step S336, the projection unit 22 projects the image.

The operation process of the present embodiment has been described. Steps S312 to S318, steps S321 to S327, and step S330 to S336 may be performed in parallel.

### <3-4. Fourth Embodiment>

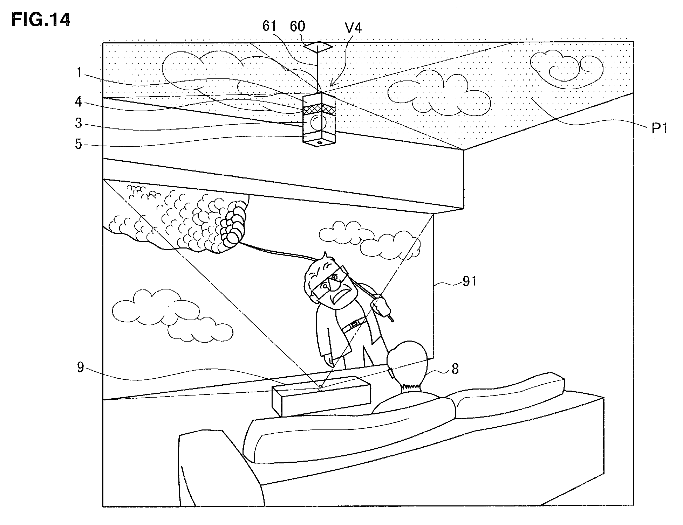

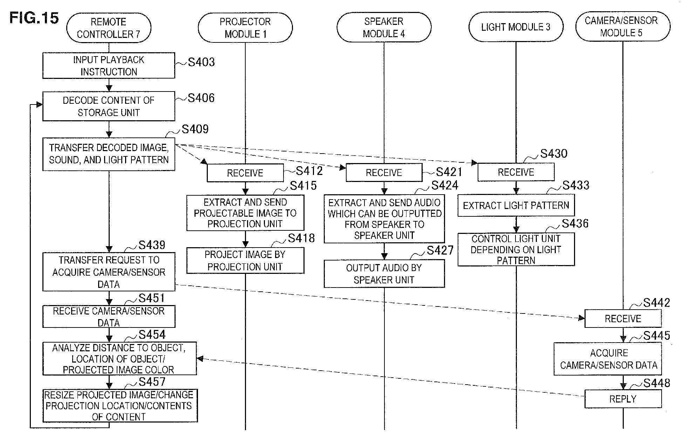

Subsequently, in the fourth embodiment, a functional module system V4 having functions of projector, speaker, light, and camera/sensor will be described with reference to FIGS. 14 and 15.

### (Arrangement)

FIG. 14 is a diagram illustrated to describe the arrangement of the functional module system V4 according to the fourth embodiment. As illustrated in FIG. 14, the functional module system V4 is configured to include the projector module 1, the speaker module 4, the light module 3, and the camera/sensor module 5 which are sequentially connected to the luminaire power supply unit 60 provided in a ceiling via the suspension member 61.

The functional module system V4 is controlled by the remote controller 7 (not shown in FIG. 14) implemented as a smartphone or the like held by the user 8.

The projector module 1 extracts a projectable image data from the data transmitted from the remote controller 7 and projects the image P1 onto the ceiling as illustrated in FIG. 14. In addition, the speaker module 4 extracts audio, which can be outputted from a speaker, from the data transmitted from the remote controller 7 and outputs the audio as sound. Further, the light module 3 extracts a light pattern from the data transmitted from the remote controller 7 and controls the lighting depending on the light pattern.

In addition, the camera/sensor module 5 detects the surrounding circumstances in response to a request from the remote controller 7 to acquire camera/sensor data and returns the data as a reply. For example, the camera/sensor module 5 captures an image of the user (subject) 8 and returns it to the remote controller 7 as a reply. The remote controller 7 recognizes the position, posture, gaze direction, or the like of the user 8 by analyzing the captured image. Then, the remote controller 7 performs resizing of the image to be projected from the projector module 1 of the functional module system V4, adjustment of projection position (direction), change in contents of the content, or the like, depending on the recognition result. Specifically, for example, when the user 8 gazes at the image P1 on the ceiling, for example, when the user 8 stares at the ceiling or stands up (the user 8 approaches the camera/sensor module 5) and looks upward, the remote controller 7 zooms in on the image P1 on the ceiling to be easy to view.

In addition, the camera/sensor module 5 may capture a projected image 91 (image projected onto the wall by a projector 9) being viewed by the user 8 and may return it to the remote controller 7 as a reply. In this case, the remote controller 7 recognizes the contents (an object or color contained in the projected image 91) of the projected image 91 by analyzing the captured image and performs a change in contents of the content provided from the functional module system V4, depending on the recognition result. Specifically, for example, when the projected image 91 contains an image of the blue sky, the remote controller 7 selects the content that provides a space of the blue sky. When the projected image 91 contains an image of the universe, the remote controller 7 selects the content that provides a space of the universe.

In the example illustrated in FIG. 14, the image of the blue sky is projected onto the ceiling, and natural sound (sound of birds, sound of wind, or the like) is played back from the speaker module 4. Further, the illumination from the light module 3 is performed with the color corresponding to the projected image of the blue sky, thereby providing the space of the blue sky.

Thus, it is possible to provide a predetermined scenic view, music, natural sound, light beam, or the like, for example, without installing an additional display device, screen, window, or the like in the living space, thereby providing a comfortable space where residents can relax. In addition, the projector module 1, the speaker module 4, the light module 3, and the camera/sensor module 5 that implement them are connected in series as illustrated in FIG. 14, and are connected to the luminaire power supply unit 60 that is previously installed. Thus, these modules can be installed in the living space without obstructing a scenic view.

### (Operation Process)

Subsequently, the operation process of the present embodiment will be described with reference to FIG. 15. FIG. 15 is a sequence diagram illustrating the operation process by the projector module 1, the speaker module 4, the light module 3, and the camera/sensor module 5 included in the functional module system V4 according to the fourth embodiment, and the remote controller 7. As illustrated in FIG. 15, first, in step S403, the user I/F unit 74 of the remote controller 7 receives a playback instruction as an input.

Then, in step S206, the control unit 70 of the remote controller 7 reads out content from the storage unit 71 and causes the decoder unit 73 to decode it, in response to the input of the playback instruction. In this case, the control unit 70 may acquire metadata of the content played back by another projector 9 from the projector 9 and may select content (i.e. having the same attribute) with a similar atmosphere to the content being played back currently depending on the metadata.

Next, in step S409, the control unit 70 of the remote controller 7 transmits the decoded content data (herein, for example, image, sound, and light pattern) to the projector module 1, the speaker module 4, and the light module 3 that constitute the functional module system V4.

Subsequently, the process in steps S412 to S436 is performed similarly to the process illustrated in steps S212 to S236 illustrated in FIG. 11.

Then, in step S439, the remote controller 7 transfers an acquisition request of camera/sensor data to the camera/sensor module 5.

Next, in step S442, the camera/sensor module 5 receives the data transmitted from the remote controller 7.

Then, the camera/sensor module 5 acquires the data through the camera/sensor unit 52 in step S445, and returns it to the remote controller 7 as a reply in step S448. Specifically, the camera/sensor unit 52 captures the projected image 91 that is being projected by the user 8 or the other projector 9.

Subsequently, in step S451, the remote controller 7 receives the camera/sensor data (herein, captured image).

Next, in step S454, the control unit 70 of the remote controller 7 analyzes the distance (distance between the camera/sensor module 5 and the user 8) to the user (object) 8, a location where the user 8 is located, a posture, a gaze direction, and an object or color contained in the projected image 91, based on the received captured image.

Then, in step S457, the control unit 70 performs resizing of the image P1 projected from the projector module 1 of the functional module system V4, adjustment of projection position, change in contents of the content, or the like, depending on the analysis result. For example, the control unit 70 zooms in/out on the image P1 onto the ceiling depending on the change (near/far) in the distance to the user 8.

Then, the control unit 70, when changing the contents of content depending on the analysis result, returns the process to step S406, causes new contents of content to be decoded, and transfers the decoded content data to the projector module 1 or the like. In addition, the control unit 70, when performing resizing of the projected image, adjustment of projection position, or the like, transfers the resized projected image or a signal of the projection position change to the projector module 1.

In the present embodiment, the above-described steps S406 to S457 are continuously repeated. Thus, when the camera/sensor data acquired continuously by the camera/sensor module 5 varies, the contents of the content or adjustment are changed in real time, thereby reflecting this on the contents to be outputted from the functional module system V4.

The operation process of the present embodiment has been described. Steps S412 to S418, steps S421 to S427, steps S430 to S436, and steps S439 to S457 may be performed in parallel.

### <3-5. Fifth Embodiment>

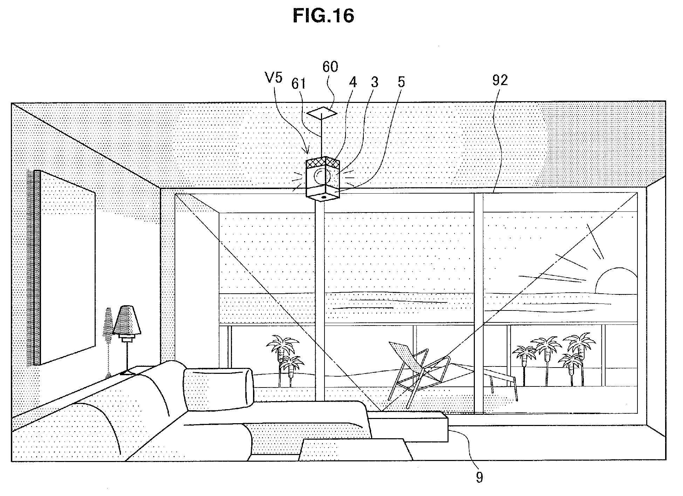

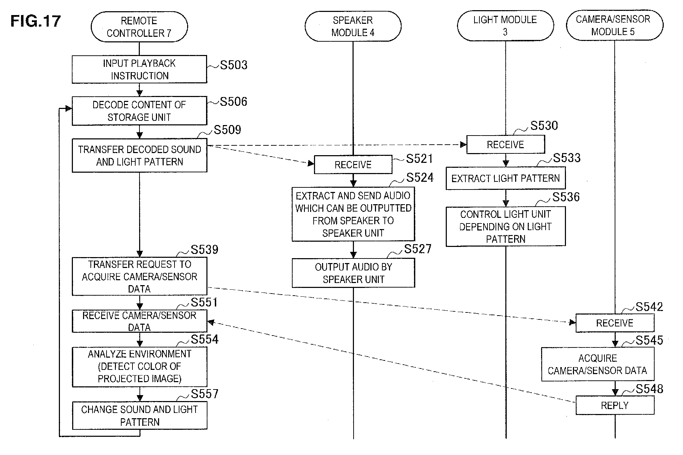

Subsequently, in the fifth embodiment, a functional module system V5 having functions of speaker, light, and camera/sensor will be described with reference to FIGS. 16 and 17.

### (Arrangement)

FIG. 16 is a diagram illustrated to describe the arrangement of the functional module system V5 according to the fifth embodiment. As illustrated in FIG. 16, the functional module system V5 is configured to include the speaker module 4, the light module 3, and the camera/sensor module 5 which are sequentially connected to the luminaire power supply unit 60 provided in a ceiling via the suspension member 61.

The functional module system V5 is controlled by the remote controller 7 (not shown in FIG. 16) implemented as a smartphone or the like held by the user 8.

The speaker module 4 extracts audio, which can be outputted from a speaker, from the data transmitted from the remote controller 7 and outputs the audio as sound. Further, the light module 3 extracts a light pattern from the data transmitted from the remote controller 7 and controls the lighting depending on the light pattern.

In addition, the camera/sensor module 5 acquires camera/sensor data in response to a request from the remote controller 7 and returns the data as a reply, which is similar to the fourth embodiment. For example, the camera/sensor module 5 captures an image of the user (subject) 8 and returns it to the remote controller 7 as a reply. In addition, the camera/sensor module 5 may capture a projected image 92 being projected onto a wall by the other projector 9 and may return it to the remote controller 7 as a reply.

In the example illustrated in FIG. 16, the projected image 92 (still/moving image) of a porch to watch the sunset over the sea is projected by the projector 9 onto the wall. The remote controller 7 may select content (space of "sunset" or the like) with a similar atmosphere (e.g., having the same attribute of "sunset") depending on metadata of the content (the projected image 92 of a porch to watch the sunset over the sea) from the projector 9, and may transfer contents (sound and light pattern) of the content to the functional module system V5. Alternatively, the remote controller 7 detects an image color (e.g., orange) of the projected image 92 captured by the camera/sensor module 5 and controls the light module 3 to perform illumination with a color (e.g., the same color tone) corresponding to the image color.

Thus, it is possible to provide a color or sound that matches the atmosphere of the room, for example, without installing an additional display device, screen, window, or the like in the living space, thereby providing a comfortable space where residents can relax. In addition, the speaker module 4, the light module 3, and the camera/sensor module 5 that implement them are connected in series as illustrated in FIG. 16, and are connected to the luminaire power supply unit 60 that is previously installed. Thus, these modules can be installed in the living space without obstructing a scenic view.

### (Operation Process)

Subsequently, the operation process of the present embodiment will be described with reference to FIG. 17. FIG. 17 is a sequence diagram illustrating the operation process of the speaker module 4, the light module 3, and the camera/sensor module 5 included in the functional module system V5 according to the fifth embodiment, and the remote controller 7. As illustrated in FIG. 17, first, in step S503, the user I/F unit 74 of the remote controller 7 receives a playback instruction as an input.

Then, in step S206, the control unit 70 of the remote controller 7 reads out content from the storage unit 71 and causes the decoder unit 73 to decode it, in response to the input of the playback instruction.

Next, in step S409, the control unit 70 of the remote controller 7 transmits the decoded content data (herein, for example, sound and light pattern) to the speaker module 4 and the light module 3 that constitute the functional module system V5.

Subsequently, the process in steps S512 to S536 is performed similarly to the process illustrated in steps S412 to S436 illustrated in FIG. 15.

In addition, the subsequent steps S539 to S551 are also performed similarly to the process illustrated in steps S439 to S451 illustrated in FIG. 15.

Next, in step S554, the control unit 70 of the remote controller 7 analyzes an environment of the space based on the received captured image. Specifically, for example, the control unit 70 detects the color of the projected image 91 by the projector 9 based on the captured image.

Then, in step S557, the control unit 70 changes the sound to be played back from the speaker module 4 included in the functional module system V5 or the illumination by the light module 3 included in the functional module system V5, depending on the analysis result.

Then, the control unit 70, when changing the contents of the content depending on the analysis result, returns the process to step S506 and transfers content data (sound or light pattern) obtained by decoding contents of new content to the speaker module 4 or the light module 3.

In the present embodiment, the above-described steps S506 to S557 are continuously repeated. Thus, when the camera/sensor data acquired continuously by the camera/sensor module 5 varies, the contents of the content are changed in real time, thereby reflecting this on the contents to be outputted from the functional module system V4.

The operation process of the present embodiment has been described. Steps S521 to S527, steps S530 to S536, and steps S539 to S557 may be performed in parallel.

### <3-6. Sixth Embodiment>

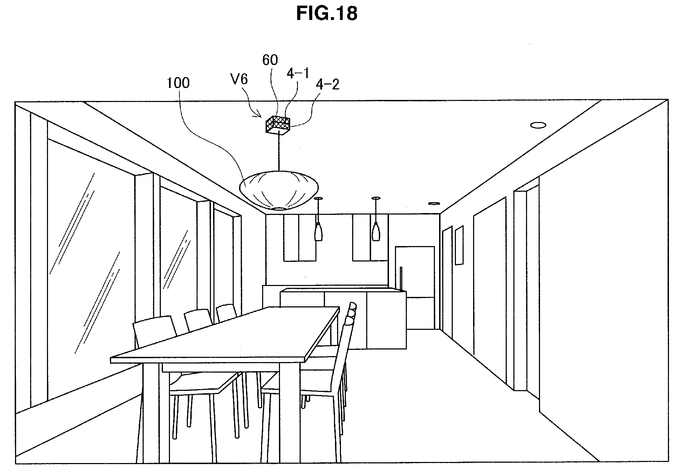

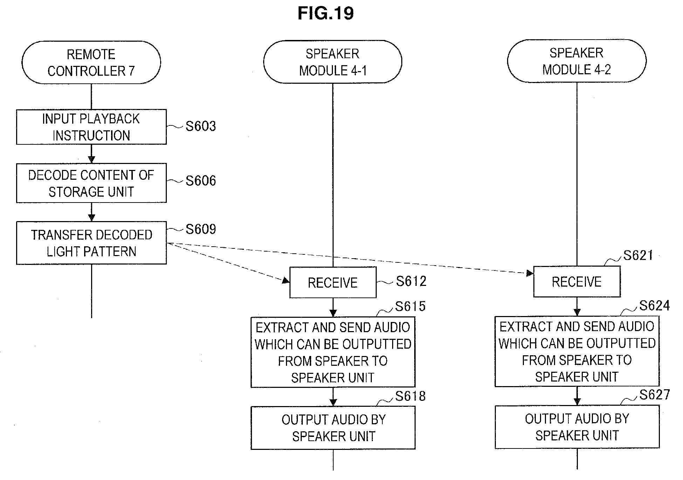

Subsequently, in the sixth embodiment, a functional module system V6 having a function of speaker and a luminaire will be described with reference to FIGS. 18 and 19.

### (Arrangement)

FIG. 18 is a diagram illustrated to describe the arrangement of the functional module system V6 according to the sixth embodiment. As illustrated in FIG. 18, the functional module system V6 is configured to include a plurality of the speaker modules 4-1 and 4-2 and a luminaire 100, which are connected to the luminaire power supply unit 60 provided in a ceiling.

The luminaire 100 receives the power from the speaker module 4-2 connected thereto. The ON/OFF status of the luminaire 100 may be controlled by the remote controller 7 or may be controlled by a power switch provided as a separate component.

In addition, the functional module system V6 is controlled by the remote controller 7 (not shown in FIG. 16) implemented as a smartphone or the like held by the user 8.

The speaker module 4 extracts audio, which can be outputted from a speaker, from the data transmitted from the remote controller 7 and outputs the audio as sound.

Thus, it is possible to provide a predetermined sound, for example, without installing additional audio equipment in the living space, thereby providing a comfortable space where residents can relax. In addition, the plurality of speaker modules 4-1 and 4-2 that implement them are connected in series as illustrated in FIG. 18, and are connected to the luminaire power supply unit 60 previously installed. Thus, these modules can be installed in the living space without obstructing a scenic view.

In addition, as illustrated in FIG. 18, a normal luminaire can also be connected to the functional module system V6, and thus any function (projector, speaker, light, or camera/sensor) to be added to the normal luminaire can be installed depending on the applications without obstructing a scenic view.

In addition, in each embodiment described above, the functional module system V is configured to include a plurality of functional modules having different functions that are connected in series, but the present embodiment is not limited thereto. A plurality of functional modules having the same function may be connected or a normal luminaire can be connected.

### (Operation Process)

Subsequently, the operation process of the present embodiment will be described with reference to FIG. 19. FIG. 19 is a sequence diagram illustrating the operation process of a plurality of the speaker modules 4-1 and 4-2 included in the functional module system V6 according to the sixth embodiment, and the remote controller 7. As illustrated in FIG. 19, first, in step S603, the user I/F unit 74 of the remote controller 7 receives a playback instruction as an input.

Then, in step S606, the control unit 70 of the remote controller 7 reads out content from the storage unit 71 and causes the decoder unit 73 to decode it, in response to the input of the playback instruction.

Next, in step S609, the control unit 70 of the remote controller 7 transmits the decoded content data (herein, for example, light pattern) to the plurality of speaker modules 4-1 and 4-2 that constitute the functional module system V6.

Subsequently, the process in steps S612 to S627 is performed similarly to the process illustrated in steps S221 to S227 illustrated in FIG. 11.

The operation process of the present embodiment has been described. Steps S612 to S618 and steps S621 to S627 may be performed in parallel.

### <3-7. Seventh Embodiment>

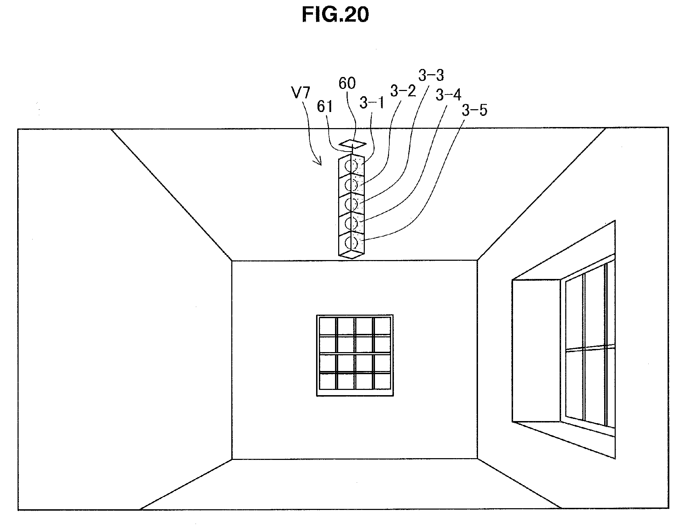

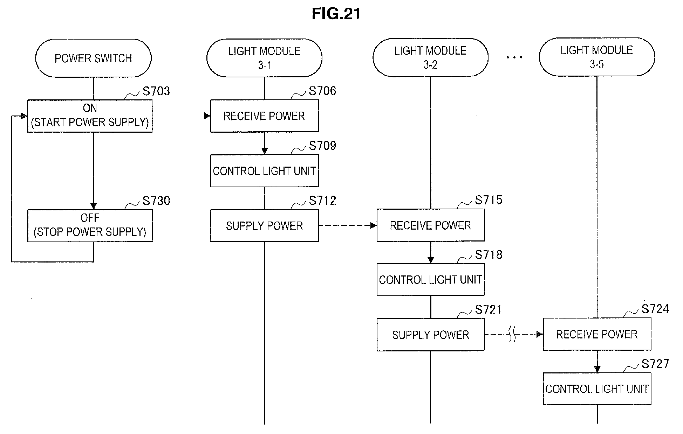

Subsequently, in the seventh embodiment, a functional module system V7 having a function of light will be described with reference to FIGS. 20 and 21.

### (Arrangement)

FIG. 20 is a diagram illustrated to describe the arrangement of the functional module system V7 according to the seventh embodiment. As illustrated in FIG. 20, the functional module system V7 is configured to include a plurality of light modules 3-1, 3-2, 3-3, 3-4, and 3-5 that are connected to the luminaire power supply unit 60 provided in a ceiling via the suspension member 61.

The light modules 3-1 to 3-5 may be controlled by the remote controller 7, or may be controlled by a power switch provided as a separate component.

Thus, the plurality of light modules 3-1 to 3-5 are connected in series as illustrated in FIG. 20 and are connected to the luminaire power supply unit 60 previously installed, for example, without installing additional lighting devices at several places in the living space. Thus, these modules can be installed in the living space without obstructing a scenic view.

### (Operation Process)

Subsequently, the operation process of the present embodiment will be described with reference to FIG. 21. FIG. 21 is a sequence diagram illustrating the operation process of a plurality of the light modules 3-1 to 3-5 included in the functional module system V7 according to the seventh embodiment, and the remote controller 7. It will be described a case where ON/OFF status of the plurality of light modules 3-1 to 3-5 are controlled by a power switch.

As illustrated in FIG. 21, first, in step S703, when the power switch is turned ON, the power supply from the power supply unit 60 is started.

Then, in step S706, the light module 3-1 receives the power from the power supply unit 60.

Next, in step S709, the light module 3-1 controls the light unit 32 to be turned on.

Subsequently, in step S712, the light module 3-1 supplies the power to the light module 3-2 connected thereto.

Then, in steps S715 to S727, the light modules 3-2 to 3-5 perform the power supply and lighting control, and further supply the power to another light module when the other light module is connected thereto.

The operation process of the present embodiment has been described. Steps S706 to S709 and step S712 may be performed in parallel. In addition, steps S715 to S718 and step S721 may be performed in parallel.

### <3-8. Eighth Embodiment>

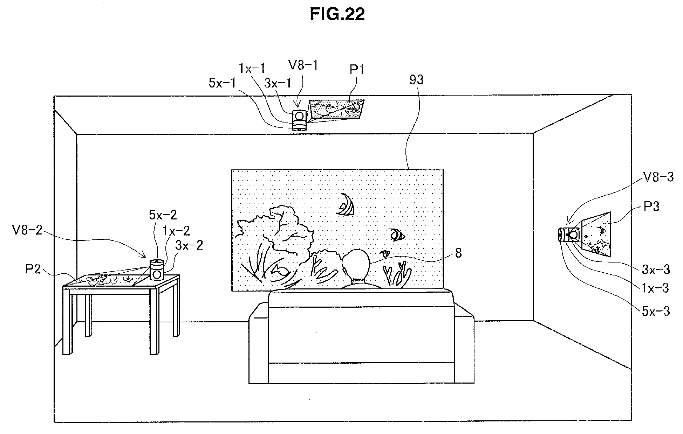

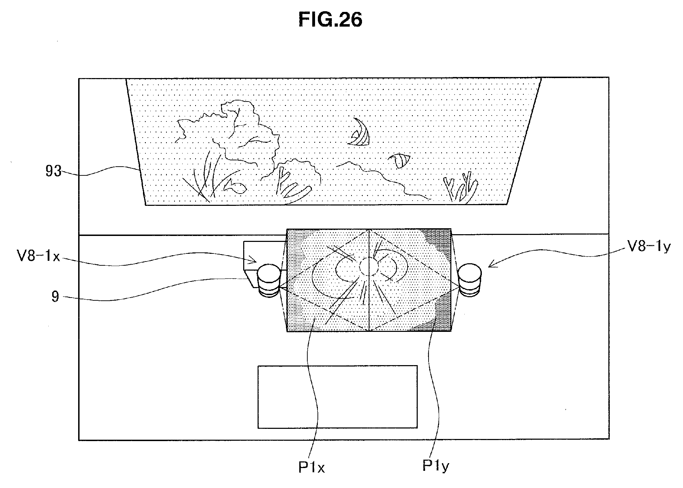

Subsequently, in the eighth embodiment, a functional module system V8 having functions of light, projector, and camera/sensor will be described with reference to FIGS. 22 and 26.

### (Arrangement)

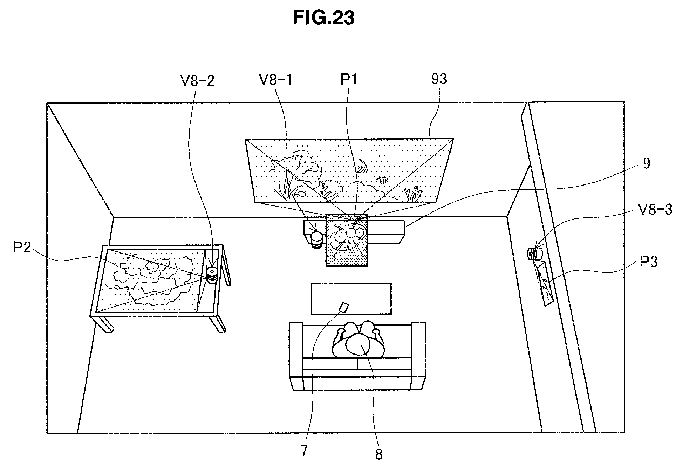

FIG. 22 is a diagram illustrated to describe the arrangement of the functional module system V8 according to the eighth embodiment. FIG. 23 is a top view of the arrangement illustrated in FIG. 22.

In the present embodiment, a plurality of functional module systems V8-1, V8-2, and V8-3 are installed toward the multiple directions in the space, and operate in coordination with each other. Specifically, for example as illustrated in FIGS. 22 and 23, the functional module system V8-1 is installed on the ceiling, the functional module system V8-2 is provided on the table, and the functional module system V8-3 is provided on the side wall.

Even for all the functional module systems V8-1 to V8-3 installed toward any of the directions, a light module 3x included in the functional module system V8 is connected to the luminaire power supply unit 60 (not shown in FIGS. 22 and 23).

In addition, the light module 3x, a projector module 1x, and a camera/sensor module 5x that constitute the functional module system V8 according to the eighth embodiment are formed in a cylindrical housing as illustrated in FIGS. 22 and 23.

The light module 3x receives the power from the power supply unit 60 and supplies the power to the projector module 1 connected thereto. In addition, the light module 3x extracts a light pattern from the data transmitted from the remote controller 7 (refer to FIG. 23) and performs the lighting control depending on the light pattern.

The projector module 1x extracts projectable image data from the data transmitted from the remote controller 7 and projects an image P (still/moving image) onto the wall on which the power supply unit is installed. This allows the projector module 1x included in the functional module system V8-1 to project the image P1 onto the ceiling, for example as illustrated in FIGS. 22 and 23. In addition, the projector module 1x-2 included in the functional module system V8-2 can project an image P2 onto the upper surface of the table, and the projector module 1x-3 included in the functional module system V8-3 can project an image P3 onto the side wall.

In addition, the camera/sensor module 5x acquires camera/sensor data in response to a request from the remote controller 7 and returns it as a reply. The camera/sensor unit 52 of the camera/sensor module 5x according to the present embodiment may be implemented as an imaging unit and G-sensor (accelerometer). As one example, the camera/sensor module 5 captures an image 93 (still/moving image) projected by the other projector 9 and returns it to the remote controller 7 as a reply. In addition, the camera/sensor module 5 returns data (G-sensor data) indicating the direction in which the functional module system V8 is installed to the remote controller 7 as a reply.

Thus, it is possible for the remote controller 7 to control an image corresponding to the direction in which the functional module systems V8-1 to V8-3 are installed to be projected from the projector modules 1x-1 to 1x-3, respectively.

For example, in the examples illustrated in FIGS. 22 and 23, the image 93 of an underwater landscape from the projector 9 is played back on the wall in the front of the user 8. Thus, the remote controller 7 analyzes the captured image of the image 93 and controls the content with the same attribute, that is, "underwater space" to be constructed.

Specifically, the remote controller 7 controls an image of the sea surface as viewed from the underwater or an image of the sea bottom as viewed from the underwater to be projected, depending on the direction in which each functional module system V8 is installed. For example, the remote controller 7 causes the image P1 of the seawater surface as viewed from the underwater to be projected onto the ceiling from the functional module system V8-1. The remote controller 7 causes the image P2 of the sea bottom as viewed from the underwater to be projected onto the upper surface of the table from the functional module system V8-2, depending on the direction in which each of the functional module systems V8 is installed. In addition, the image P2 of the underwater landscape is projected onto the side wall from the functional module system V8-3.

Furthermore, the remote controller 7 control the light module 3x included in each of the functional module systems V8 to perform the lighting (blue lighting or the like) to construct the underwater space.

Thus, it is possible for the user 8 to experience a sense of feeling as if he is in the sea by projecting the image of underwater landscape onto the front and side, projecting the image of seawater surface onto the ceiling, projecting the image of the sea bottom onto a table or floor, and further performing the lighting corresponding to the underwater.

In this way, it is possible to provide a predetermined scenic view and lighting, for example, without installing an additional display device, screen, window, or the like to the living space, thereby providing a comfortable space where residents can relax. In addition, the projector module 1x, the light module 3x, the camera/sensor module 5x that implement them are connected in series as illustrated in FIG. 22 and are connected to the luminaire power supply unit that is previously installed, thus these modules can be installed in the living space without obstructing a scenic view.

The remote controller 7 may determine an attribute of the image 93 projected by the other projector 9 based on the result obtained by analyzing the captured image or based on metadata of the image 93 received from the projector 9.

### (Operation Process)

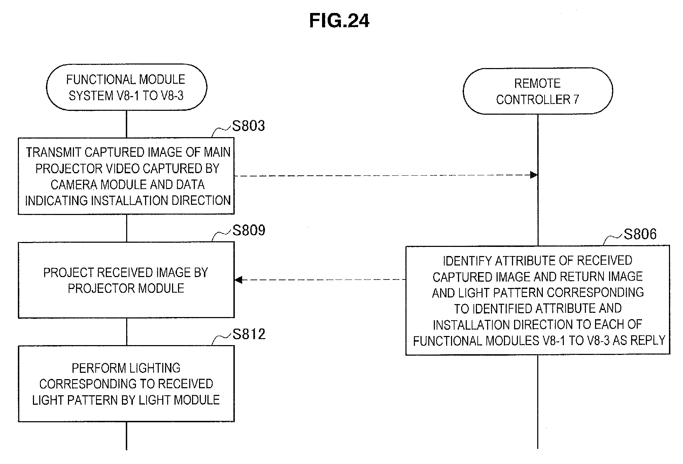

Subsequently, the operation process of the present embodiment will be described with reference to FIG. 24. FIG. 24 is a sequence diagram illustrating the operation process by the plurality of functional module systems V8-1 to V8-3 according to the eighth embodiment and the remote controller 7.

First, in step S803, each of the functional module systems V8-1 to V8-3 transmits a captured image of a main projector video (specifically, the image 93) captured by the camera/sensor module 5x and data (e.g., G-sensor data) indicating the direction in which the module is installed to the remote controller 7. The process in step S803 may be performed by triggering a request to acquire the camera/sensor data transmitted from the remote controller 7 in accordance with the playback instruction by the user.

Next, in step S806, the remote controller 7 identifies an attribute of the received captured image, extracts content (in this example, image and light pattern) corresponding to the attribute from the storage unit 71, decodes it, and returns it to each of the functional module systems V8-1 to V8-3 as a reply. In this case, the remote controller 7 returns an image corresponding to the direction in which each of the functional module systems V8-1 to V8-3 is installed to each of the functional module systems V8-1 to V8-3 as a reply. For example, an image for the ceiling is returned to the functional module system V8-1 installed facing upward, an image for a table or floor is returned to the functional module system V8-2 installed facing downward, and an image for a side wall is returned to the functional module system V8-3 installed in the horizontal direction.

Then, in step S809, each of the functional module systems V8-1 to V8-3 projects the received image through the projector module 1x.

In addition, in step S812, each of the functional module systems V8-1 to V8-3 performs the lighting corresponding to the received light pattern through the light module 3x.

The operation process of the present embodiment has been described. Steps S803 to S812 may be performed repeatedly. The continual transmission of the captured image of the main projector video allows the space content reproduced by each of the functional module systems V8-1 to V8-3 to be changed in real time depending on a change in the main projector video. In addition, the functional module system V8 according to the eighth embodiment may be configured to include a light module having a sensor (e.g., G-sensor) for detecting the installation direction and a projector module. In this case, the light module returns the G-sensor data indicating the direction in which the functional module system V8 is installed to the remote controller 7 as a reply in response to a request from the remote controller 7.

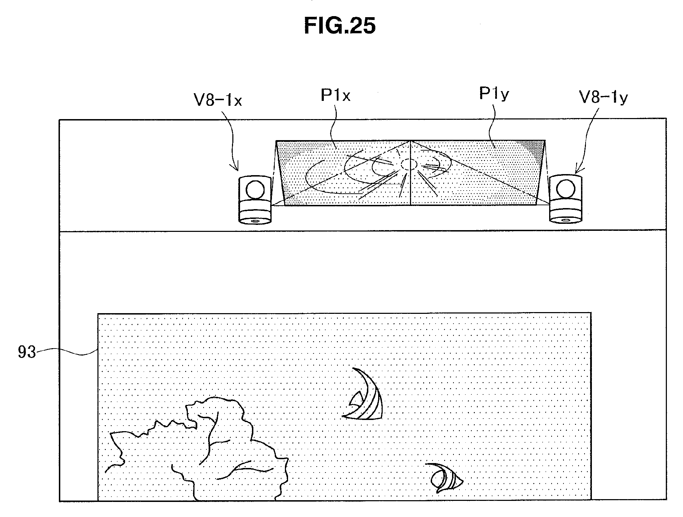

In addition, the arrangement of the plurality of functional module systems V8 illustrated in FIGS. 22 and 23 is merely an example, and the arrangement according to the present embodiment is not limited thereto. For example, as illustrated in FIGS. 25 and 26, a plurality of functional module systems V8-1x and V8-1y may be arranged on the ceiling.

FIG. 25 is a diagram illustrated to describe the arrangement of a modification according to the eighth embodiment. In addition, FIG. 26 is a top view of the arrangement illustrated in FIG. 25. As illustrated in FIGS. 25 and 26, when the plurality of functional module systems V8-1x and V8-1y are installed facing upward, the plurality of functional module systems V8-1x and V8-1y project images P1x and P1y for the ceiling onto the ceiling.

In this case, the images P1x and P1y may be the same image, and may be segmented parts of one image as illustrated in FIGS. 24 and 25. It is possible to project a larger image by forming one image using the plurality of images P1x and P1y. In this case, the remote controller 7 distributes images obtained by segmenting the image depending on the installation direction among the functional module systems having the same installation direction, thereby constructing one image with a plurality of projected images as illustrated in FIGS. 24 and 25. In addition, each of the functional module systems V8-1x to V8-1y recognizes the existence of each other by capturing each other with camera/module systems Sx-1 and 5x-2, each of the functional module systems V8-1x to V8-1y may request a segmented image from the remote controller 7.

### <3-9. Ninth Embodiment>

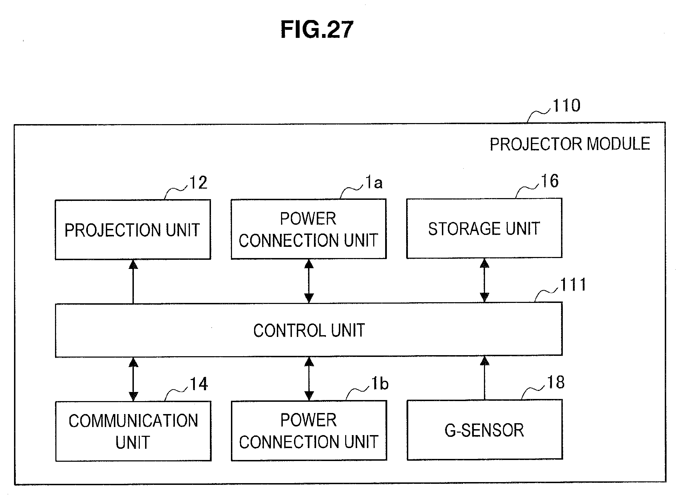

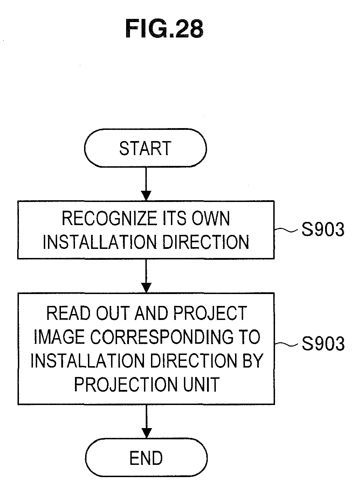

In each of the embodiments described above, the remote controller 7 selects content and the decoded content is transmitted to each of the functional module systems. However, the functional module system according to the present embodiment is not limited thereto. For example, the functional modules that constitute the functional module system may determine content to be outputted by their own decision. This will be described in detail with reference to FIGS. 27 and 28.

### (Configuration)

FIG. 27 is a block diagram illustrating the configuration of a projector module 110 according to the ninth embodiment. As illustrated in FIG. 27, the projector module 110 is configured to include power connection units 1a and 1b, a projection unit 12, a communication unit 14, a storage unit 16, and a G-sensor 18. The power connection units 1a and 1b, the projection unit 12, the communication unit 14 are described previously with reference to FIG. 2, and thus the description thereof herein will be omitted.

The storage unit 16 stores the content to be played back by the functional module system.

The G-sensor 18 is an acceleration sensor for detecting the direction in which the projector module 110 is installed. The G-sensor 18 is an example of a sensor for detecting the installation direction, and is not limited to the sensor according to the present embodiment.

A control unit 111 recognizes its own installation direction based on the data detected by the G-sensor 18, reads out an image corresponding to the installation direction from the storage unit 16, and causes the projection unit 12 to project it.

### (Operation Process)

The operation process of the projector module 110 having the configuration described above will be described with reference to FIG. 28. FIG. 28 is a flowchart illustrating the operation process of the projector module 110 illustrated in FIG. 27.

As illustrated in FIG. 28, first, in step S903, the control unit 111 of the projector module 110 recognizes its own installation direction based on the data detected by the G-sensor 18.

Next, in step S906, the control unit 111 reads out an image (image for ceiling, image for side wall, or image for table/floor) corresponding to the installation direction from the storage unit 16. Specifically, for example, the image for ceiling is read out from the storage unit 16 when it is installed facing upward, the image for table/floor is read out from the storage unit 16 when it is installed facing downward, and the image for side wall is read out from the storage unit 16 when it is installed in the horizontal direction. Then, the control unit 111 controls the projection unit 12 to project the read image.

It has been described a case where the projector module 110 that constitutes the functional module system determines an image to be projected depending on its own installation direction.

### <3-10. Tenth Embodiment>

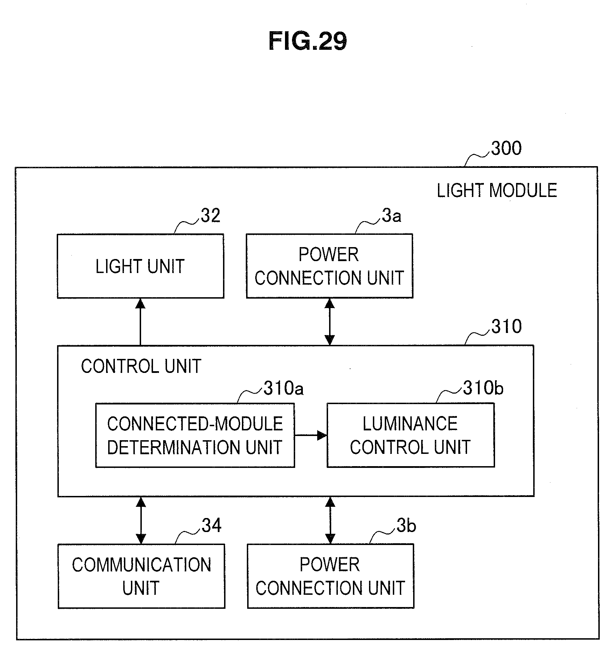

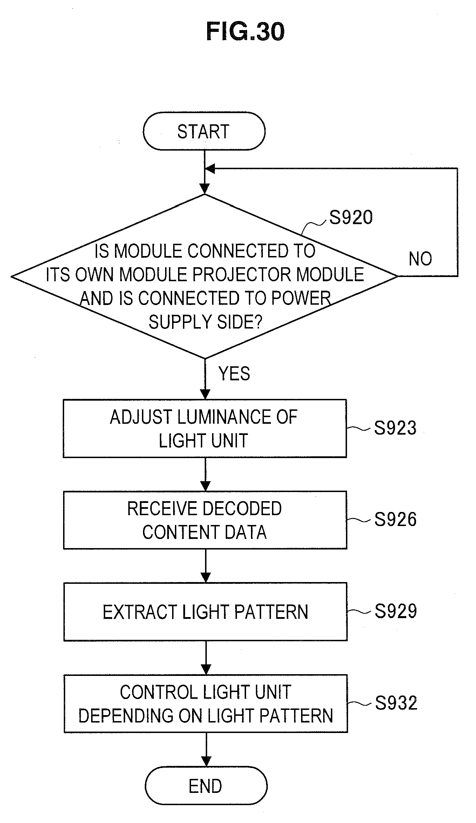

Subsequently, it will be described a case where the light module that constitutes the functional module system controls its own illumination depending on a function of another module connected thereto with reference to FIGS 29 and 30. As illustrated in the above embodiments, the functional module system V may be configured to include a plurality of different functional modules connected to each other. Thus, for example as illustrated in the above fourth embodiment, when the projector module 1 is connected to the power supply unit 60 through the light module 3, there are some cases where the user 8 viewing the image P1 projected onto the ceiling feels that he is dazzled by the illumination of the light module 3. Thus, the light module 3 may be configured to adjust its own illumination depending on the combination of functional modules. This will be described in detail with reference to FIGS. 29 and 30.

### (Configuration)

FIG. 29 is a block diagram illustrating the configuration of a light module 300 according to the tenth embodiment. As illustrated in FIG. 20, the light module 300 is configured to include power connection units 3a and 3b, a light unit 32, a communication unit 34, and a control unit 310. The power connection units 3a and 3b, the light unit 32, the communication unit 34 are described previously with reference to FIG. 4, and thus the description thereof herein will be omitted.

The control unit 310 functions to control each component of the light module 300. Specifically, the control unit 310 according to the present embodiment functions as a connected-module determination unit 310a and a luminance control unit 310b.

The connected-module determination unit 310a determines whether another functional module connected to the power supply unit 60, that is, another functional module connected to the power connection unit 3a is the projector module 1 (module with a function to output a video).

The luminance control unit 310b, if the connected-module determination unit 310a determines that the projector module 1 is connected to the power supply side, controls the light unit 32 to lower (than a predetermined value) the luminance.

### (Operation Process)

The operation process of the light module 300 having the configuration described above will be described with reference to FIG. 30. FIG. 30 is a flowchart illustrating the operation process of the light module 300 illustrated in FIG. 29.

First, in step S920, the control unit 310 (the connected-module determination unit 310a) of the light module 300 determines whether a module connected thereto is the projector module 1 and is connected to the power supply side.

Next, if it is determined that it is the projector module 1 and is connected to the power supply side (Yes in S920), the control unit 310 (the luminance control unit 310b) adjusts the luminance of the light unit 32 to be lower than a predetermined value in step S923. This allows the user 8 viewing the image projected onto the ceiling to be prevented from being dazzled by the illumination of the light module 3.

Subsequently, in step S926 to S932, a process that is similar to that in step S430 to S436 according to the fourth embodiment illustrated in FIG. 15 is performed.

It has been described the case where the light module 300 that constructs the functional module system adjusts the luminance of the lighting depending on the function of another module connected to the light module 300.

### «4. Conclusion»

As described above, the functional module system according to the embodiments of the present disclosure allows a plurality of functional modules to be sequentially connected to a power supply unit and to be connected in different order, thereby providing various functions without obstructing a scenic view.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, a computer program for causing at least any one of the functional modules described above or hardware such as CPU, ROM, and RAM incorporated in the remote controller 7 to execute the function of the control unit 70 of the remote controller 7 can be created. In addition, a computer-readable storage medium in which the computer program is stored is also provided.

The location in which the above-described content data (source) is stored is not limited to the storage unit 71 incorporated in the remote controller 7, but may be on a cloud server. In this case, the remote controller 7 transfers information indication the location in which the selected content (e.g., URL) is stored to each functional module.

Moreover, in the fourth and fifth embodiments, the image projected from the other projector 9 may be a screen of a display device such as television equipment or personal computer, or may be a picture such as paper medium affixed to a wall or ceiling. In addition, in these embodiments, the remote controller 7 may control content having an attribute that is the same to the music played back by another speaker device to be provided from the functional module system, for example, based on a result, but not limited to the analysis result of the image projected by the another projector 9, obtained by analyzing the music.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) A functional module system including:
   a first functional module configured to be connectable to a power supply unit for a luminaire; and
   a second functional module configured to be connectable to the first functional module,
   wherein the first and second functional modules are further connectable to the power supply unit in order of the second functional module and the first functional module by changing connection order.
(2) The functional module system according to (1),
   wherein the first and second functional modules include power connection units configured to receive power from the second and first functional modules connected to the power supply unit or to an upper stream side.
(3) The functional module system according to (1) or (2),
   wherein the first functional module includes
   a communication unit configured to be capable of receiving video content, and
   an output unit configured to output the video content.
(4) The functional module system according to (3),
   wherein the second functional module includes
   a sensor unit configured to detect surrounding circumstances,
   wherein the video content to be outputted to the output unit included in the first functional module is changed depending on data detected by the sensor unit.
(5) The functional module system according to (4),
   wherein the sensor unit detects data indicating an installation direction of the functional module system, and
   wherein the output unit outputs video content corresponding to the installation direction.
(6) The functional module system according to (3),
   wherein the first functional module includes
   a storage unit configured to store content for an upward output and content for a downward output,
   a sensor unit configured to detect data indicating an installation direction of the functional module system, and
   a control unit recognizes its own installation direction based on the data detected by the sensor unit, reads out content corresponding to the recognized installation direction from the storage unit, and controls the content to be outputted from the output unit.
(7) The functional module system according to (1) or (2),
   wherein the first functional module includes
   a communication unit configured to be capable of receiving audio content, and
   a speaker unit configured to output the audio content.
(8) The functional module system according to (1) or (2),
   wherein the first functional module includes
   a communication unit configured to be capable of receiving a light pattern, and
   a light unit configured to light depending on the light pattern.
(9) The functional module system according to (8),
   wherein the second functional module includes
   a sensor unit configured to detect surrounding circumstances,
   wherein a light pattern by which the light unit lights is changed depending on data detected by the sensor unit.
(10) The functional module system according to (8),
   wherein the first functional module further includes
   a sensor unit configured to detect data indicating an installation direction of the functional module system,
   wherein the second functional module includes
   a communication unit configured to be capable of receiving video content, and
   an output unit configured to output the video content, and
   wherein the output unit outputs video content corresponding to the installation direction.
(11) The functional module according to (8),
   wherein the first functional module includes
   a sensor unit configured to detect whether the second functional module has a function of outputting a video and is located on a side of the power supply unit, and
   a control unit configured to control brightness of the light unit depending on a result obtained by detection of the sensor unit.

### Reference Signs List

- 1, 1x-1 to 1x-3, 110: projector module (ceiling/side type)
- 1a, 1b: power connection unit
- 12: projection unit
- 14: communication unit
- 16: storage unit
- 18: G-sensor
- 2: projector module (floor type)
- 2a: power connection unit
- 22: projection unit
- 24: communication unit
- 3, 3-1 to 3-5, 3x-1 to 3x-3, 300: light module
- 3a, 3b: power connection unit
- 32: light unit
- 34: communication unit
- 310: control unit
- 310a: connected-module determination unit
- 310b: luminance control unit
- 4: speaker module
- 4a, 4b: power connection unit
- 42, 42a, 42b: speaker unit
- 44: communication unit
- 5, 5x-1 to 5x-3: camera/sensor module
- 5a: power connection unit
- 52: camera/sensor unit
- 54: communication unit
- 7: remote controller
- 70: control unit
- 71: storage unit
- 72: communication unit
- 73: decoder unit
- 74: user I/F unit
- 8: user
- 9: another projector
- V1 to V8, V8-1 to V8-3, V8-1x, V8-1y, V100, V200: functional module system
- P1 to P3, P1-1 to P1-4, P1x, P1y: image (projected image)

## Claims

1. A functional module system comprising:
a first functional module configured to be connectable to a power supply unit for a luminaire; and
a second functional module configured to be connectable to the first functional module, wherein the first and second functional modules are further connectable to the power supply unit in order of the second functional module and the first functional module by changing connection order.

2. The functional module system according to claim 1,
wherein the first and second functional modules include power connection units configured to receive power from the second and first functional modules connected to the power supply unit or to an upper stream side.

3. The functional module system according to claim 1,
wherein the first functional module includes
a communication unit configured to be capable of receiving video content, and
an output unit configured to output the video content.

4. The functional module system according to claim 3,
wherein the second functional module includes
a sensor unit configured to detect surrounding circumstances,
wherein the video content to be outputted to the output unit included in the first functional module is changed depending on data detected by the sensor unit.

5. The functional module system according to claim 4,
wherein the sensor unit detects data indicating an installation direction of the functional module system, and
wherein the output unit outputs video content corresponding to the installation direction.

6. The functional module system according to claim 3,
wherein the first functional module includes
a storage unit configured to store content for an upward output and content for a downward output,
a sensor unit configured to detect data indicating an installation direction of the functional module system, and
a control unit recognizes its own installation direction based on the data detected by the sensor unit, reads out content corresponding to the recognized installation direction from the storage unit, and controls the content to be outputted from the output unit.

7. The functional module system according to claim 1,
wherein the first functional module includes
a communication unit configured to be capable of receiving audio content, and
a speaker unit configured to output the audio content.

8. The functional module system according to claim 1,
wherein the first functional module includes
a communication unit configured to be capable of receiving a light pattern, and
a light unit configured to light depending on the light pattern.

9. The functional module system according to claim 8,
wherein the second functional module includes
a sensor unit configured to detect surrounding circumstances,
wherein a light pattern by which the light unit lights is changed depending on data detected by the sensor unit.

10. The functional module system according to claim 8,
wherein the first functional module further includes
a sensor unit configured to detect data indicating an installation direction of the functional module system,
wherein the second functional module includes
a communication unit configured to be capable of receiving video content, and
an output unit configured to output the video content, and
wherein the output unit outputs video content corresponding to the installation direction.

11. The functional module according to claim 8,
wherein the first functional module includes
a sensor unit configured to detect whether the second functional module has a function of outputting a video and is located on a side of the power supply unit, and
a control unit configured to control brightness of the light unit depending on a result obtained by detection of the sensor unit.
